# NEUE EUROPÄISCHE PATENTSCHRIFT

(11) **EP 2 794 362 B2**
(45) Veröffentlichungstag und Bekanntmachung des Hinweises auf die Entscheidung über den Einspruch: **26.12.2018**
(45) Hinweis auf die Patenterteilung: 18.11.2015
(21) Anmeldenummer: 12821013.5
(22) Anmeldetag: 27.11.2012
(51) Int. Cl.: B32B 5/02, B32B 9/04, B32B 9/02, B32B 7/14, B60R 21/2165

(54) **VERBUNDSCHICHT**
COMPOSITE LAYER
COUCHE COMPOSITE

(30) Priorität: 19.12.2011 DE 102011121378
(43) Veröffentlichungstag der Anmeldung: 29.10.2014
(73) Patentinhaber: ANTOLIN DEUTSCHLAND GmbH, 85391 Allershausen (DE)
(72) Erfinder: TOMAJ, Anton, 73734 Esslingen (DE)
(74) Vertreter: Capitán García, Maria Nuria
(86) Internationale Anmeldenummer: PCT/DE2012/200078
(87) Internationale Veröffentlichungsnummer: WO 2013/091628

(56) Entgegenhaltungen:
- EP-B1- 1 750 978
- DE-A1-102006 025 666
- DE-A1-102006 025 666
- DE-A1-102009 032 580
- DE-B3-102006 054 586
- DE-B3-102006 055 861
- DE-B3-102009 002 309
- DE-U1-202006 005 319
- DE-U1-202006 005 319

## Beschreibung

Die Erfindung betrifft eine Verbundschicht nach Anspruch 1. Das Dokument DE 10 2006 054 586 offenbart die Merkmale des Oberbegriffs des Anspruchs 1. Aus diesem Dokument ist auch ein bereich weises Weglassen des Klebemittels bekannt. Verbundschichten zur Abdeckung eines in einem Fach angeordneten Airbags weisen während der Herstellung eingebrachte Materialschwächungen auf. Diese Materialschwächungen, in Form einer Linie, ermöglicht das Reißen des Materials durch den sich bei der Zündung blähenden Airbag. Ein definiertes Reißen der Verbundschicht ist nötig, damit der Airbag sich in der für den Persönenschutz vorgesehenen Weise entfalten kann. Von der Dekorseite her soll die Reißlinie, die Materialschwächung nicht sichtbar sein.

Die Aufgabe der vorliegenden Erfindung besteht darin, eine Verbundschicht in verbesserter Ausführung zu schaffen, bei welcher ein definiertes Reißen sicher ermöglicht wird und welche insbesondere einfach und kostengünstig herstellbar ist.

Diese Aufgabe wird gelöst durch die Merkmale von Anspruch 1. Weiterbildungen ergeben sich aus den Unteransprüchen.

In einer ersten Ausführungsform der Erfindung weist lediglich die Dekorschicht eine linienförmige Materialschwächung auf, welche an deren Unterseite eingebracht ist. In dem horizontalen Bereich der H-förmigen Reißlinie sind die Träger- und die Dekorschicht nicht miteinander verklebt. Durch diesen kleberfreien Bereich bleibt die Dekorschicht weich und vermag gut einzureißen und einen eingeleiteten Riss in einer vorgesehenen Richtung weiterzuleiten.

Gemäß einer weiteren Ausführungsform der Erfindung ist vorgesehen, dass die Trägerschicht eine Materialschwächung in der für den vorgesehenen Sollreißbereich erforderlichen Form und Anordnung aufweist. Die auf der Trägerschicht aufgebrachte Dekorschicht weist eine Materialschwächung auf, welche in Abschnitten mit der Materialschwächung der Trägerschicht zusammenfällt. In anderen Bereichen fehlt die Materialschwächung in der Dekorschicht dort wo die Trägerschicht eine Materialschwächung aufweist. Damit die Sollreißlinie von der Dekorseite her nicht sichtbar ist bzw. nur in geringstem Maße auffällig werden kann, sind von der Unterseite der Dekorschicht her, also der Seite, mit der die Dekorschicht auf die Trägerschicht geklebt ist, nur kurze Abschnitte geschwächt, welche dann im Verbund über den Schwächungsabschnitten in der Trägerschicht liegen.

Die Erfindung nutzt das Prinzip, wonach es ausreicht, wenn die Materialschwächung in der Dekorschicht, der Unterseite der Dekorschicht nur in Form von sogenannten Initialschnitten vorliegt. In Verbindung mit dem klebefreien Abschnitt zwischen den Schichten ergibt sich ein sauberes Reißen der Verbundschicht im Wesentlichen entlang einer vorgesehenen Reißlinie.

Durch die durchgehend - bezogen auf die Länge der Sollreißlinie - eingearbeitete Materialschwächung in der unter der Dekorschicht befindlichen Trägerschicht bewirkt der durch die Zündung sich aufblähende Airbag, die Airbagklappe ein definiertes Reißen der Verbundschicht. Die Materialschwächung in der Trägerschicht, der ausgesparte Abschnitt innerhalb der Klebschicht zwischen Dekorschicht und Trägerschicht sowie die Initialschnitte in der Dekorschicht ergeben dann insgesamt ein sauberes Durchbrechen, Aufreißen der Verbundschicht.

Das erfindungsgemäße Verfahren zur Herstellung der Verbundschicht geht aus von einer Trägerschicht und einer auf der Trägerschicht aufzubringenden Dekorschicht, bspw. eine Lederschicht. Bei der Trägerschicht kann es sich um ein Vlies, ein Gewirke, Gewebe, einen Schaumkörper handeln. Auf der Rückseite der Dekorschicht wird entlang der Reißlinie, der Linie, entlang der beim Zünden des Airbags die Verbundschicht aufreißen soll, eine Materialschwächung eingebracht. Dies erfolgt in Form eines Schnittes mittels eines Schneidrades oder mittels eines Lasers. Das Material der Dekorschicht wird dabei nicht vollständig durchtrennt, sondern der Schnitt geht nur bis in eine solche tiefe, dass sich eine deutlich reduzierte Festigkeit der Schicht ergibt, gleichzeitig aber diese Art der Schwächung von der Sichtseite her nicht zu erkennen ist.

Anschließend wird auf die Rückseite des Dekormaterials und/oder die Oberseite des Trägermaterials Kleber aufgetragen, gesprüht. Hierbei wird ein streifenförmiger Abschnitt der Reißlinie ausgespart, d.h. in diesem Streifen erfolgt kein Kleberauftrag. Das Aussparen von Kleberauftrag erfolgt bspw. durch Auflegen einer Schablone auf die Oberseite der Trägerschicht, die Unterseite der Dekorschicht.

Nach dem Trocknen des Klebers wird die Dekorschicht mit der Unterseite auf die Trägerschicht passgenau aufgelegt. Es erfolgt durch Erwärmen ein aktivieren der Klebkomponenten, dabei werden die Schichten aufeinander gedrückt. Die beiden Schichten sind nun bis auf den ausgesparten Bereich, Abschnitt entlang der Reißlinie miteinander verklebt.

Gemäß einer Weiterbildung des erfindungsgemäßen Verfahrens wird auch in der Trägerschicht eine Materialschwächung eingebracht, vorzugsweise von der Unterseite der Schicht her. Der mittels Messer oder Laser eingebrachte, die Schwächung bewirkende Schnitt folgt dabei der der gewünschten Reißlinie, wobei vorgesehen sein kann, diesen Schwächungsschnitt über die gesamte Reißlinie oder nur über Abschnitte der Reißlinie auszuführen.

Der Kleberauftrag erfolgt auf eine oder beide der Schichten, jeweils auf die Ober- bzw. die Unterseite. Zur Erzielung der klebefreien Zonen entlang der vorgesehenen Reißlinie werden bei Sprühauftrag Schablonen aufgelegt.

Des Weiteren erfolgt die Erläuterung von Ausführungsbeispielen der Erfindung an Hand der Zeichnungen.

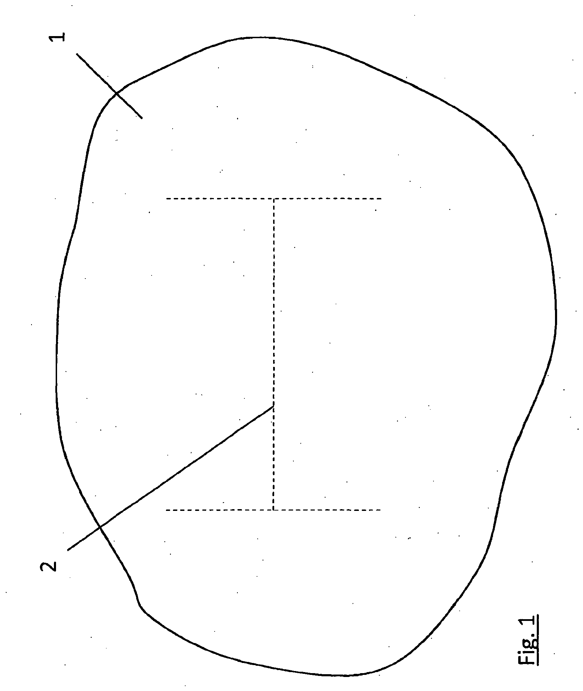

Figur 1 zeigt als Ausschnitt einen Teil einer Verbundschicht 1, bestehend aus einer oberen Dekorschicht 3 sowie einer darunter liegenden Trägerschicht, mit einer angedeuteten Reißlinie 2 in Form der gestrichelten Linie. Die Reißlinie 2 ist in Form eines H gestaltet, mit einer langen horizontal verlaufenden Reisslinie, der beidseitig von zwei senkrecht dazu laufenden Reisslinien begrenzt ist. Unterhalb dieses Ausschnittes der Verbundschicht 1 ist in einem Fach unterhalb einer Klappe der Airbag verstaut. Die Klappe, die Kante der Klappe verläuft unterhalb des horizontalen Abschnittes der Reißlinie 2. Beim Zünden des Airbags soll die Verbundschicht 1 entlang der Reißlinie 2 aufreißen.

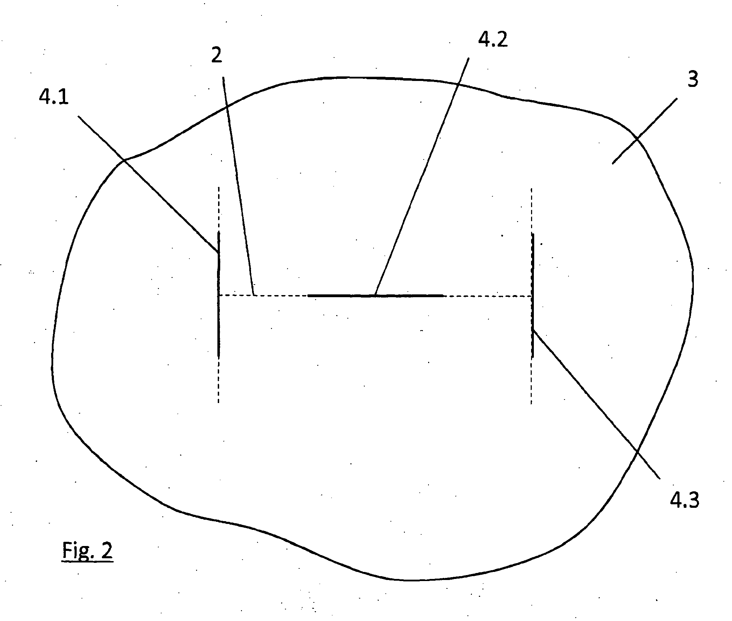

Figur 2 zeigt den der Figur 1 entsprechenden Ausschnitt der Dekorschicht 3, bei der es sich bspw. um ein Naturleder handelt. Entlang der vorgesehenen Reißlinie 2 sind an der Unterseite der Lederschicht drei Initialschnitte 4.1, 4.2, 4.3 eingebracht. Diese die Materialschicht nicht vollständig durchdringenden und so die Materialschwächung ergebenden Schnitte verlaufen senkrecht oder in einem Winkel senkrecht zur Materialschicht und werden mittels Werkzeug oder per Laser eingebracht.
   Wie in Figur 2 wiedergegeben folgen die Initialschnitte 4.1, 4.2, 4.3 in der Dekorschicht nicht vollständig der vorgesehenen Reißlinie 2. Der in Richtung des horizontalen Teils der Reißlinie orientierte Initialschnitt 4.2 folgt diesem nicht über die gesamte Länge sondern ist - von der Mitte ausgehend - nur verkürzt ausgeführt. Die den horizontalen Teil der Reißlinie 2 begrenzenden, senkrecht verlaufenden Initialschnitte 4.1, 4.3 werden von dem mittleren Initialschnitt 4.2 nicht getroffen.

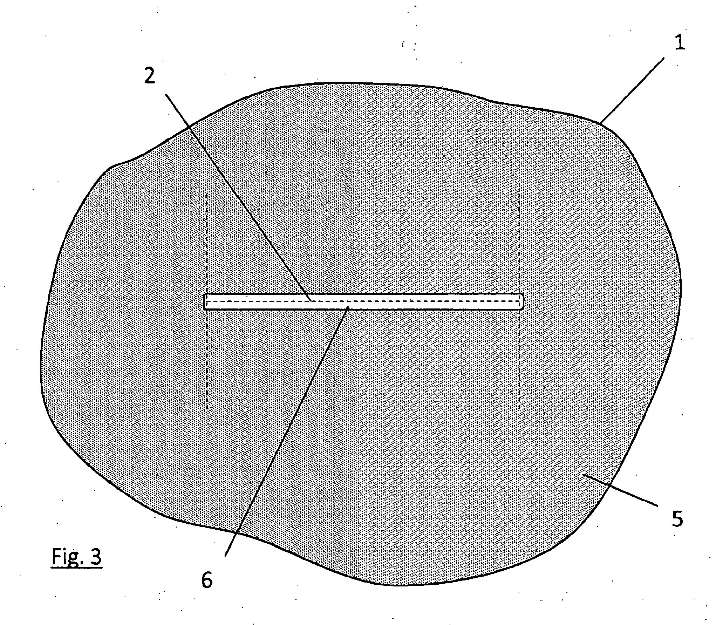

Figur 3 zeigt innerhalb des Ausschnitts der Verbundschicht 1 (Figur 1) den Klebebereich 5, d.h. die vom Kleber bestrichene Fläche der Oberseite der Trägerschicht bzw. der Unterseite der Dekorschicht 3. Um den horizontalen Abschnitt der Reißlinie 2 ist ein streifenförmiger Bereich 6 klebstofffrei ausgeführt. Dieser klebstofffreie Bereich 6 erstreckt sich hierbei bis zu den senkrecht verlaufenden Abschnitten der Reißlinie 2.

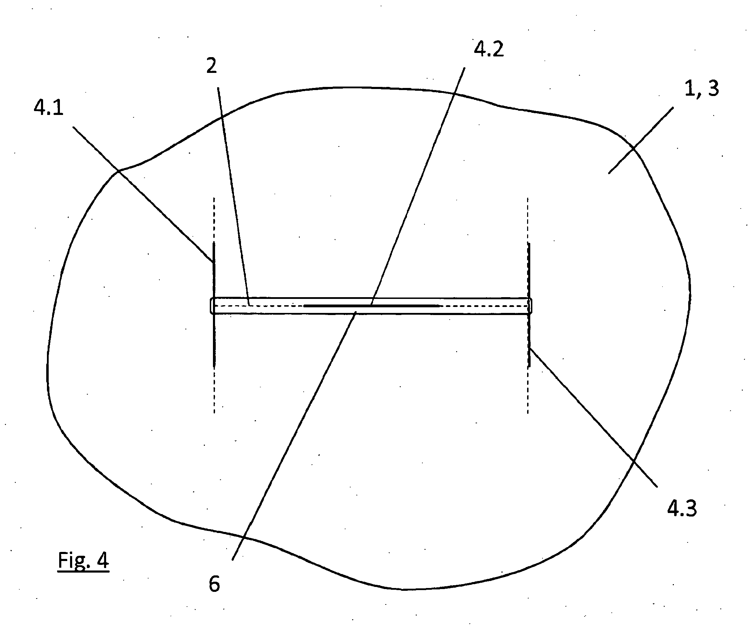

Figur 4 zeigt die sich insgesamt unterhalb der Dekorschicht 3 ergebende Situation, wonach der klebstofffreie Bereich 6 die senkrecht verlaufenden äußeren Initialschnitte 4.1, 4.3 erfasst und sich als Streifen beidseitig des mittleren Initialschnittes 4.2 erstreckt. Die gezeigte Ausführung der in der Unterseite der Dekorschicht 3 eingebrachten Initialschnitte 4.1, 4.2, 4.3 sowie der klebstofffreie Bereich 6 zwischen Dekorschicht 3 und der Trägerschicht ergibt ein definiertes Reißverhalten im Zündfall. Dabei wird zunächst die Verbundschicht 1 im Bereich des Initialschnittes 4.2 reißen, wobei dieser eingeleitete Riss wegen des Fehlens von Klebstoff und der dadurch sich ergebenden Weichheit des Materials schnell und definiert bis zu den senkrecht orientierten Initialschnitten 4.1, 4.3 läuft, welche nun ebenfalls das Reißen der Verbundschicht einleiten, und zwar in einer Richtung senkrecht zu der ersten Reißrichtung.

### Bezugszeichen

- 1: Verbundschicht
- 2: Reißlinie, Sollreißlinie
- 3: Dekorschicht, Leder, Kunstleder
- 4.1: Initialschnitt (Unterseite Dekorschicht)
- 4.2: Initialschnitt (Unterseite Dekorschicht)
- 4.3: Initialschnitt (Unterseite Dekorschicht)
- 5: Klebebereich
- 6: klebstofffreier Bereich (Klebebereich 5)

## Patentansprüche

1. Verbundschicht zur Abdeckung eines Kraftfahrzeugairbags, bestehend aus einer Trägerschicht und einer Dekorschicht (3), welche mittels Klebemittels miteinander verbunden sind, wobei
- diese Verbundschicht (1) in einem vorgesehenen Bereich eine Sollreißlinie (2) aufweist,
- die Sollreißlinie (2) aus einer wenigstens abschnittsweise ausgeführten Materialschwächung (4.1, 4.2, 4.3) in der Träger- und/oder der Dekorschicht (3) besteht,
**dadurch gekennzeichnet, dass** die Sollreißlinie (2) in Form eines H ausgeführt ist, mit einem horizontalen und sich beidseitig anschließend je einen vertikalen Reißlinienabschnitt, wobei sich im Bereich des horizontalen Abschnittes der Sollreißlinie kein Klebemittel zwischen der Träger- und der Dekorschicht (3) befindet, während sich in den vertikalen Abschnitten Klebemittel zwischen der Träger- und der Dekorschicht (3) befindet und im horizontalen Abschnitt der Sollreißlinie (2) die Materialschwächung (4.2) der Dekorschicht von der Mitte ausgehend nicht über die gesamte Länge ausgeführt ist und an wenigstens einem Ende somit nicht den vertikalen Abschnitt der Soll-reißlinie (2) erreicht.

2. Verbundschicht nach Anspruch 1, **dadurch gekennzeichnet, dass** die Materialschwächung (4.1,4.2,4.3) sich in der Unterseite der Dekorschicht (3) befindet.

3. Verbundschicht nach Anspruch 1 oder 2, **dadurch gekennzeichnet, dass** die Materialschwächung (4.1, 4.2, 4.3) lediglich in Abschnitten der vorgesehenen Reißlinie (2) in der Träger- und/oder Dekorschicht (3) ausgeführt ist.

4. Verbundschicht nach Anspruch 1, die Dekorschicht weist in dem mittelern Abschnitt des horizontalen Teils der Sollreißlinie sowie in den beiden sich anschließenden senkrechten Teilen jeweils eine Materialschwächung (4.1, 4.2, 4.3) auf.

5. Verfahren zur Herstellung einer Verbundschicht nach einem der vorhergehenden Ansprüche,
- Bereitstellen einer Träger- und einer Dekorschicht (3),
- in wenigstens einer der beiden Schichten wird entlang einer vorgesehenen Sollreißlinie (2) zumindest abschnittsweise eine Materialschwächung eingearbeitet, wobei die Sollreißlinie (2) in Form eines H ausgeführt ist, mit einem horizontalen und sich beidseitig anschließend je einen vertikalen Reißlinienabschnitt, wobei im horizontalen Abschnitt der Sollreißlinie (2) die Materialschwächung (4.2) der Dekorschicht von der Mitte ausgehend nicht über die gesamte Länge ausgeführt ist und an wenigstens einem Ende somit nicht den vertikalen Abschnitt der Soll-reißlinie (2) erreicht
wenigstens eine der beiden Schichten wird flächig mit einem Klebemittel beschichtet,
- wobei in wenigstens einem Abschnitt (6) der Sollreißlinie (2) kein Klebemittel aufgetragen wird, wobei sich im Bereich des horizontalen Abschnittes der Sollreißlinie kein Klebemittel zwischen der Träger- und der Dekorschicht (3) befindet, während sich in den vertikalen Abschnitten Klebemittel zwischen der Träger- und der Dekorschicht (3) befindet
- die Schichten werden passgenau übereinandergelegt und zur Erzeugung einer Klebverbindung behandelt.

6. Verfahren nach Anspruch 5,
die Materialschwächung (4.1, 4.2, 4.3) wird rückseitig der Dekorschicht (3) durch einen Schnitt bzw. Laserbeaufschlagung erzeugt.

## Claims

1. Composite layer for an automobile airbag cover, made up of a bearing layer and a decorative layer (3) that are connected to each other by an adhesive, where
- said composite layer (1) comprises a designated break line (2) in a specified area,
- the designated break line (2) consists of a material weakening (4.1, 4.2, 4.3) defined by at least some sections in the supporting layer and/or the decorative layer (3),
**characterised in that** the designated break line (2) is shaped as an H, with a horizontal break line segment and on either side thereof a vertical segment, where the horizontal break line segment does not include any adhesive between the supporting layer and the decorative layer (3), while in the vertical segments there is an adhesive between the supporting layer and the decorative layer (3) and in the horizontal segment of the designated break line (2) the material weakening (4.2) of the decorative layer is not present on the entire length starting from the centre and therefore does not reach at least on one end the vertical segment of the designated break line (2).

2. Composite layer according to claim 1, **characterised in that** the material weakening (4.1, 4.2, 4.3) is located on a bottom side of the decorative layer (3).

3. Composite layer according to claim 1 or 2, **characterised in that** the material weakening (4.1, 4.2, 4.3) is present only in segments of the break line (2) provided in the supporting and/or decorative layer (3).

4. Composite layer according to claim 1 where the decorative layer respectively presents a material weakening (4.1, 4.2, 4.3) in the central section of the horizontal part of the designated break line, as well as in the two connecting perpendicular parts.

5. Method for manufacturing a composite layer according to one of the preceding claims,
- providing a supporting layer and a decorative layer (3),
- introducing in at least one of the two layers at least in segments a material weakening along a foreseen designated break line (2), where the designated break line (2) is made with an H shape, having a horizontal break line segment and on both sides thereof a vertical line, where in the horizontal segment of the designated break line (2) the material weakening (4.2) of the decorative layer is not made on the entire length starting from the centre and therefore at least on one end does not reach the vertical segment of the designated break line (2),
at least one of the two layers is coated in a flat manner with an adhesive,
- where in at least one segment (6) of the designated break line (2) no adhesive is applied, where in the horizontal segment of the designated break line no adhesive is applied between the supporting layer and the decorative layer (3), while in the vertical segments an adhesive is applied between the supporting layer and the decorative layer (3),
- the layers are superimposed with setting accuracy and treated to generate an adhesive union.

6. Method according to claim 5,
the material weakening (4.1, 4.2, 4.3) is generated on the rear side of the decorative layer (3) by laser cutting or laser application.

## Revendications

1. Couche composée destinée à couvrir un coussin gonflable d'automobile, composée d'une couche de base et d'une couche décorative (3), reliées entre elles par le biais d'un adhésif, dans laquelle
- ladite couche composée (1) présente une ligne de rupture de consigne (2) dans une zone prévue,
- la ligne de rupture de consigne (2) se compose d'une fragilisation de matériau (4.1, 4.2, 4.3) réalisée au moins par sections dans la couche de base et/ou la couche décorative (3), **caractérisée en ce que** la ligne de rupture de consigne (2) est réalisée en forme de H, avec une section de ligne de rupture horizontale et des deux côtés, avec à la suite à chaque fois une ligne verticale, dans laquelle, dans la zone de la section horizontale de la ligne de rupture de consigne, il ne se trouve aucun adhésif entre la couche de base et la couche décorative (3), tandis que, dans les sections verticales, il y a un adhésif entre la couche de base et la couche décorative (3) et dans la section horizontale de la ligne de rupture de consigne (2), la fragilisation de matériau (4.2) de la couche décorative n'est pas réalisée sur toute la longueur en partant du centre et, dans au moins une extrémité, elle n'atteint donc pas la section verticale de la ligne de rupture de consigne (2).

2. Couche composée selon la revendication 1, **caractérisée en ce que** la fragilisation du matériau (4.1, 4.2, 4.3) se situe sur un côté inférieur de la couche décorative (3).

3. Couche composée selon la revendication 1 ou 2, **caractérisée en ce que** la fragilisation du matériau (4.1, 4.2, 4.3) est uniquement réalisée dans des sections de la ligne de rupture (2) prévues dans la couche de base et/ou la couche décorative (3).

4. Couche composée selon la revendication 1, dans laquelle la couche décorative présente respectivement une fragilisation du matériau (4.1, 4.2, 4.3) dans la section centrale de la partie horizontale de la ligne de rupture de consigne, ainsi que dans les deux parties perpendiculaires qui sont reliées.

5. Procédé destiné à la fabrication d'une couche composée selon l'une des revendications qui précèdent,
- fourniture d'une couche de base et d'une couche décorative (3),
- dans au moins l'une des deux couches, une fragilisation du matériau est introduite au moins par sections tout au long d'une ligne de rupture de consigne (2) prévue, dans laquelle la ligne de rupture de consigne (2) est réalisée en forme de H, avec une section de ligne de rupture horizontale et des deux côtés, avec à la suite à chaque fois une ligne verticale, dans laquelle, dans la section horizontale de la ligne de rupture de consigne (2), la fragilisation du matériau (4.2) de la couche décorative n'est pas réalisée sur toute la longueur en partant du centre et, dans au moins une extrémité, elle n'atteint donc pas la section verticale de la ligne de rupture de consigne (2),
au moins une des deux couches est revêtue de manière plane avec un adhésif,
- dans laquelle, dans au moins une section (6) de la ligne de rupture de consigne (2), aucun adhésif n'est appliqué, dans laquelle, dans la zone de la section horizontale de la ligne de rupture de consigne, il ne se trouve aucun adhésif entre la couche de base et la couche décorative (3), tandis que, dans les sections verticales, un adhésif est placé entre la couche de base et la couche décorative (3),
- les couches se superposent avec une précision d'ajustement et sont traitées pour la réalisation d'une liaison adhésive.

6. Procédé selon la revendication 5,
la fragilisation du matériau (4.1, 4.2, 4.3) se produit dans le côté postérieur de la couche décorative (3) par le biais d'une découpe ou d'une sollicitation au laser.
